# EUROPEAN PATENT APPLICATION

(11) **EP 4 218 396 A1**
(43) Date of publication of application: **02.08.2023**
(21) Application number: 23157047.4
(22) Date of filing: 19.11.2021
(51) Int. Cl.: A01D 46/26

(54) **SHAKER**

(30) Priority: 26.11.2020 IT 202000028601; 26.11.2020 IT 202000028619
(62) Divisional of application: 21209343.9
(71) Applicant: Agreencrop S.r.l., 56100 Pisa (IT)
(72) Inventor: Nemich, Vladimir, 56100 PISA (IT); Macoretta, Giuseppe, 56100 PISA (IT)
(74) Representative: Lunati & Mazzoni S.r.L.

(57) **Abstract**

It is provided a tree shaker (1) comprising an attachment (2) to a tree; a motor (3); a kinematic mechanism (4) configured to exploit the motor (3) to make the attachment (2) vibrate and therefore the tree and including a guide (41) defining a sliding axis (4a), a piston (42) configured to slide along the guide (41) by dragging the attachment (2), a first crank (43) configured to be rotated by the motor (3), a first connecting rod (44) configured to be kinematically interposed between the first crank (43) and the piston (42) so as to control the sliding of the piston (42) to a first speed, a second crank (45) configured to be rotated by the motor (3), a second connecting rod (46) configured to be kinematically interposed between the second crank (45) and the piston (42) so as to control the sliding of the piston (42) to a second speed and elastic means (47) interposed between the second connecting rod (46) and the piston (42) so as to load and unload according to the difference between the first speed and the second speed, vibrating the piston (42) and therefore the attachment (2).

## Description

### SHAKER

The present invention relates to a shaker of the type specified in the preamble of the first claim.

In particular, the invention relates to a device configured to facilitate the detachment and therefore the collection of different flowers and fruits, generally of trees, such as walnuts, olives, berries and chestnuts.

The shakers (also called harvesters or beater) are pneumatic or, for the most part, electric tools with extendable rods that cause the fruits to fall on the nets through the fast vibration (about 1000 beats per minute).

In detail, the shakers provide a motor for generating a motion; a rod provided with means of contact with the tree; and a kinematic mechanism configured to take the motion from the motor and transform it into a linear motion of the high frequency rod.

The means of contact with the tree can be opposing combs or a gripping element of the trunk or of a branch.

The kinematic mechanism consists of a rotary thrust crank mechanism, also known as the connecting rod-crank mechanism. It therefore provides a crank connected with a rotational pair (crankshaft) to the frame and to the big end; a connecting rod connected to the crank and to the piston integral with the rod; and a slider configured to only allow the piston to slide when moved by the connecting rod.

Some shakers are equipped with a system to reduce the vibrations discharged on the operator. It provides a mass moved linearly in the opposite direction to that of the piston and the rod so as to create a force of inertia balancing the vibrations discharged on the operator. Examples of shakers are described in EP0010203, CN104885705B, EP2002704A1 and US6658834B1.

The known technique described includes some important drawbacks.

In particular, known shakers allow only a limited part of flowers and fruit to be detached, leaving the task of manually detaching the remaining parts to the operator.

Another drawback can be identified in the fact that, to maximize the number of flowers and fruits detached from the tree, many shakers use particularly intense vibrations (in amplitude, frequency and/or force) which can lead to injuries that cause damage to trees with consequent possible parasitic diseases.

This aspect also affects the user who, in addition to having to support the weight of the entire shaker with his body, is subject to strong vibrations with serious consequences on his health.

A not secondary drawback is represented by the fact that the known shakers are characterized by relatively complex mechanics and therefore by a low efficiency and by particularly high purchase, use and maintenance costs.

In this situation, the technical task underlying the present invention is to devise a shaker capable of substantially obviating at least part of the aforementioned drawbacks.

Within the scope of said technical task, an important object of the invention is to obtain a shaker which allows to detach almost all the flowers and/or fruits.

An important object of the invention is to have a shaker capable of minimizing stress and therefore reducing the risk of damage to the tree and to the operator.

A no less important object of the invention is to provide a high-performance shaker with low purchase, use and maintenance costs.

The technical task and the specified aims are achieved by a shaker as claimed in the annexed claim 1. Examples of preferred embodiment are described in the dependent claims.

The characteristics and advantages of the invention are clarified below by the detailed description of preferred embodiments of the invention, with reference to the accompanying drawings, in which:

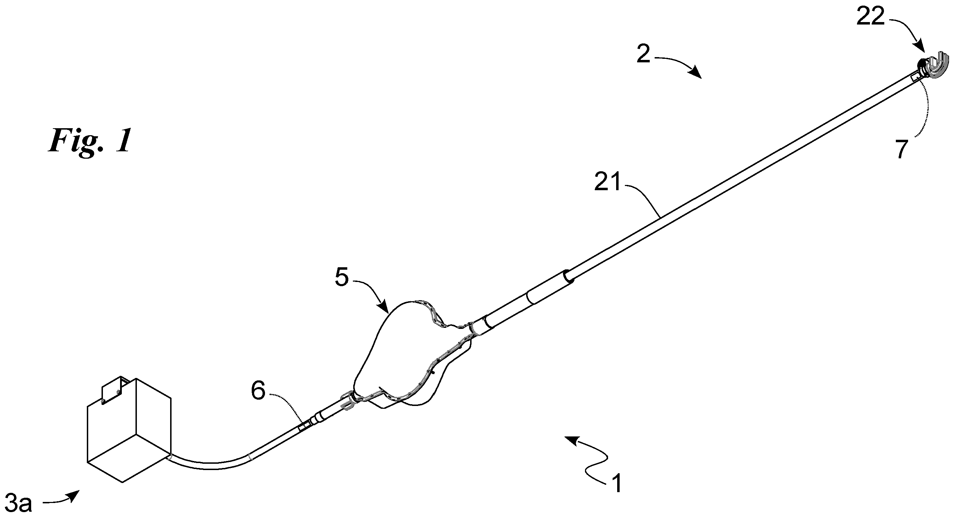

the **Fig. 1** shows, in scale, a shaker according to the invention;
the **Fig. 2** illustrates, in scale, an assembly of the shaker according to the invention;
the **Fig. 3** shows, in scale, a second view of the assembly of Fig. 2;

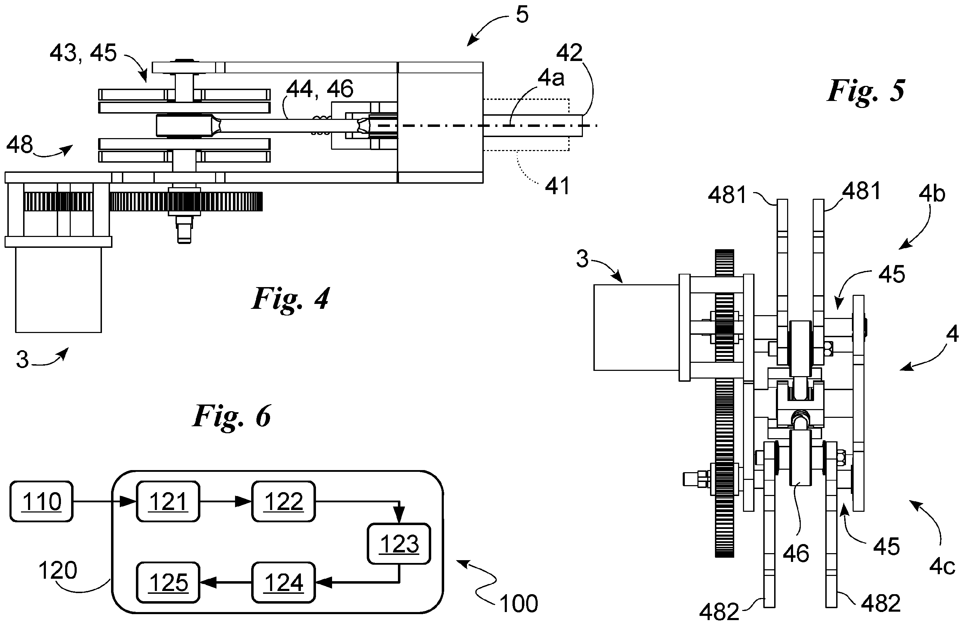

the **Fig. 4** exposes, in scale, a group of the assembly of Fig 2;
the Fig. 5 shows, in scale, a second view of the group of Fig. 4; And
the Fig. 6 introduces a schematization of a viable procedure from the shaker according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

The measurements and data reported in this text are to be considered, unless otherwise indicated, as carried out in the ICAO International Standard Atmosphere (ISO 2533).

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

With reference to the Figures, the shaker according to the invention is globally indicated with the number **1.**

It can be configured to cause the detachment of flowers and fruit from the tree. Preferably, the shaker 1 is of the shoulder type, or rather comprising a harness configured for the harness allowing an operator to load almost all of the weight of the shaker 1 on his shoulders.

The shaker 1 can comprise an attachment **2** to a tree and in detail to a part of the tree such as the trunk and/or a branch.

The attachment 2 can be configured to constrain the shaker 1 to a tree allowing the passage of forces and in particular of vibrations from the shaker 1 to the tree.

It may include a rod **21** and a gripping element **22** of the tree.

The gripping element 22 may comprise a hook and/or a gripper or other end-effector configured to engage a part of the tree regardless of the section and/or profile of said tree part. The attachment 2 can be of a known type.

The shaker 1 can comprise at least one motor **3** for generating the motion defining a speed (at the output of the motor 3) suitably of rotation; a kinematic mechanism **4** configured to exploit the motion produced by the motor 3 to vibrate the attachment 2 and therefore the tree; and preferably a crankcase 5 defining a housing for the kinematic mechanism 4 and optionally the at least one motor 3.

The crankcase 5 can be configured to structurally support motor 3 and kinematic mechanism 4.

The motor 3 may comprise a power supply **3a** for the motor.

The motor 3 can be electric and the power supply 3a can comprise a battery.

The kinematic mechanism 4 it can be configured to transform the output motion of the at least one motor 3 into an oscillatory motion of the attachment 2.

The kinematic mechanism 4 it can be identified in a connecting rod-crank mechanism and, more precisely, in a double connecting rod-crank mechanism. It can comprise a guide **41** defining a sliding axis **4a**; a piston **42** integral with the attachment 2 and configured to slide along the guide 41 dragging the attachment 2; and a first connecting rod-crank mechanism **4b** for controlling the piston 42 and a second connecting rod-cranking mechanism **4c** for controlling said piston 42.

It can be seen how the guide 41 can be integrated into the crankcase 5.

The piston 41 can be integral and made in detail in one piece to the rod 21.

The first connecting rod-crank mechanism 4b can comprise a first crank **43** configured to be rotated by the at least one motor 3; a first connecting rod **44** configured to be kinematically interposed between the first crank 43 and the piston 42 so as to control, as a function of the rotation of the first crank 43, the sliding of the piston 42 at a first speed.

The second connecting rod-crank mechanism 4c can comprise a second crank **45** configured to be rotated by the at least one motor 3; a second connecting rod **46** configured to be kinematically interposed between the second crank 45 and piston 42 so as to control, as a function of the rotation of the second crank 45, the sliding of the piston 42 at a second speed suitably substantially different from the first speed.

It should be noted that the shaker 1 can comprise only one motor 3 actuating both the connecting rod-crank mechanisms 4b and 4c which can therefore be kinematically connected to each other so as to allow the motor 3 to directly control a connecting rod-crank mechanism (for example the first 4b) and indirectly the other connecting rod-crank mechanism (for example the second 4c). The connecting rod-crank mechanisms 4b and 4c which therefore can be kinematically connected to each other, for example by means of a first toothed wheel integral with the first connecting rod 44 engaged with a second toothed wheel integral with the second connecting rod 46.

It is noted that, as better described below, the second connecting rod 46 can be configured to potentially control the sliding of the piston 42 at the second speed. In fact, the speed of the piston 42 is defined almost exclusively by the first connecting rod 44 and therefore is almost equal to the first speed, while the second connecting rod 46, being the second speed almost different from the first, pushes the piston 42 in contrast to the first connecting rod. 44 causing the onset of vibrations to be transmitted to the tree.

In order to allow the connecting rods 44 and 46 to simultaneously control the piston 42, the kinematic mechanism 4 can comprise elastic means **47** placed between the second connecting rod 46 and the piston 42 so as to load and unload according to the difference between the first speed and the second speed, vibrating the 'attack. The elastic means 47 may comprise a spring configured to load and unload by varying its length along the longitudinal axis of the second connecting rod 46. They may comprise a compression or traction spring.

Alternatively or additionally, the elastic means 47 may comprise a spring configured to load and unload as a function of the reciprocal rotation between piston 42 and second connecting rod 46. They may comprise a torsional spring.

The sliding axis 4a can be substantially parallel and coincident in detail with the barycentric longitudinal axis of the rod 21.

The cranks 43 and 45 can be hinged to the engine 3 and to the connecting rods 44 and 46.

The connecting rods 44 and 46 can be hinged to the piston 42.

The piston 42 can be integral with the attachment 2 and in detail with the rod 21. The connecting rods 44 and 46 can be hinged to the piston 42 at the same point. The at least one motor 3 can be electric.

In order to have on the piston 42 a first speed different from the second, the first connecting rod-crank mechanism 4b and the second connecting rod-crank mechanism 4c can be dimensioned differently.

For example, the first crank 43 and the second 45 can move the connecting rods 44 and 46 asynchronously.

For example, they can have different lengths (calculated between the attachment point to the engine 3 and the attachment point to the connecting rod 44 or 46) and/or the first connecting rod 44 and the second 46 can have different length (calculated between the constraint to the piston and the constraint point to the crank 43 or 45).

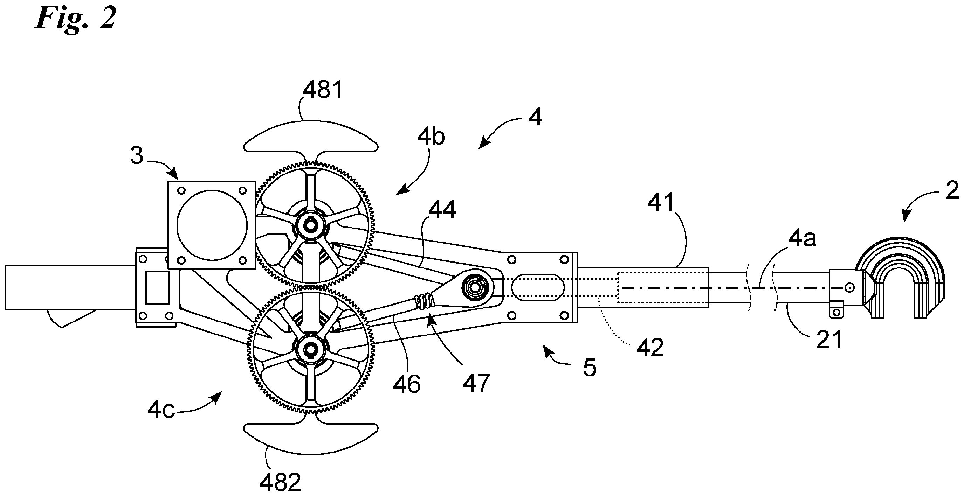

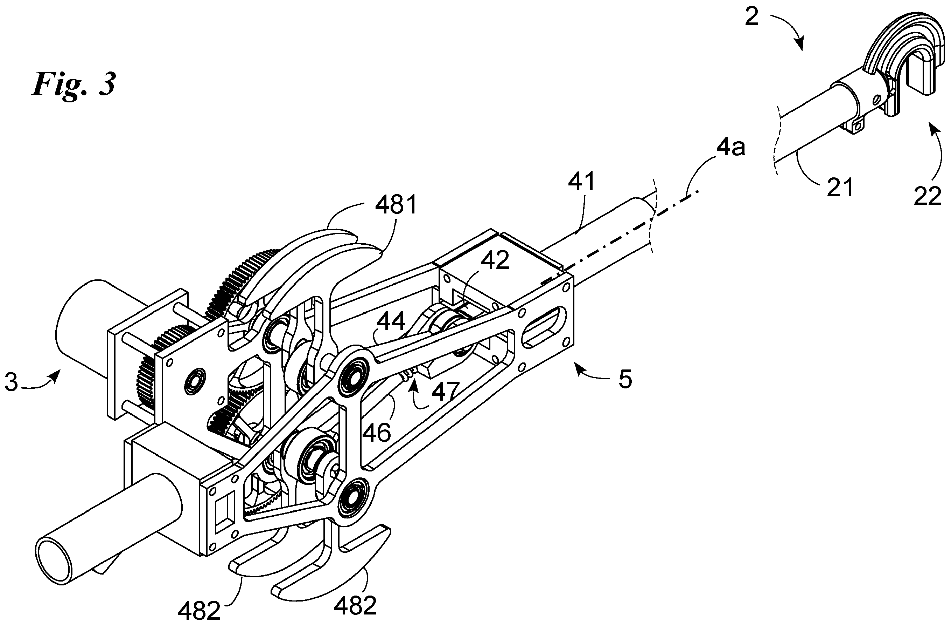

Alternatively or in addition, the first crank 43 and the second crank 45 can move the connecting rods 44 and 46 hinged in angularly distinct points as shown in Figs. 2-3).

The first crank 43 can be a crankshaft and in detail a single crank. It therefore comprises a single first connecting rod pin **43a.**

The second crank 45 can be a crankshaft and in detail a single crank. It therefore comprises only one second connecting rod pin **45a.**

In detail, the kinematic mechanism 4 can comprise at least one damper **48** of vibration configured to reduce the vibrations to the operator and therefore the stresses upstream of the kinematic mechanism 4.

The damper 48 can reduce the vibrations transmitted by the kinematic mechanism 4 to the at least one motor 3 and in detail from the connecting rods 44 and 46 to the cranks 43 and 45.

The damper 48 can comprise at least one mass balancer which is eccentric with respect to the axis of rotation of the connecting rods 44 and 46 and in detail to the connecting rod pin 43a and/or 45a.

It can comprise at least a first mass balancer **481** attached, in detail integral with the first crank 43 and in detail with the first connecting rod pin 43a; and at least a second mass balancer **482** constrained, suitably integral, to the second crank 45 and in detail to the second connecting rod pin 45a.

The first connecting rod-crank mechanism 4b can comprise the at least one first mass 481.

The second connecting rod-crank mechanism 4c can comprise the at least one second mass 482.

The first mass 481 can be eccentric to the first connecting rod pin 43a.

The second mass 482 can be eccentric to the second connecting rod pin 45a. The balancing masses 481 and 482 can be nearly the same.

Optionally, the damper 48 can comprise two first mass balancers 481 constrained on opposite sides with respect to the first connecting rod 44.

The two first mass balancers 481 can be equal to each other.

The damper 48 can comprise two second mass balancers 482 constrained on opposite sides with respect to the second connecting rod 46.

The second mass balancers 482 can be equal to each other.

Preferably the two second mass balancers 482 enclose the two first mass balancers 481 together along the rotation axes of the connecting rods 44 and 46.

The shaker 1 can comprise at least one sensor **6** for measuring the vibrations of the coupling 2 and therefore of the tree (The vibration at the attachment or at the operator, introduced below, identifies the vibration that the shaker 1 has in correspondence with the contact area with the tree/operator).

The sensor 6 can be configured to measure the vibrations exiting the kinematic mechanism 4 in detail in correspondence with the attachment 2 and for the accuracy of the contact surface with the tree.

In this document, when we talk about measuring/defining a vibration, it is preferably to be understood as measuring/defining the strength and/or frequency of the vibration even if not explicitly stated.

In detail, the sensor 6 can be configured to measure the real vibration of the attachment 2 and therefore of the tree. Alternatively or in addition, the sensor 6 can be configured to measure the force transmitted by the shaker 1 to the branch/tree. The sensor 6 may comprise a piezoelectric.

The shaker 1 can comprise at least one additional sensor **7** for measuring the vibrations felt by the operator.

The additional sensor 7 can be configured to measure the vibrations upstream from the kinematic mechanism 4 in detail of the at least one motor 3.

In detail, the additional sensor 7 can be configured to measure the real vibration (in detail the frequency and/or the force of real vibration) felt by the operator. Alternatively or in addition it can be configured to measure the vibrations discharged by the shaker 1 on the user (hands in detail).

The additional sensor 7 may comprise a piezoelectric.

The shaker 1 can comprise a control unit 7 of the shaker 1 and in detail of the at least one motor 3; and preferably an interface through which the operator can control the shaker 1.

The control unit 8 can be configured to control the at least one motor 3 at different speeds and in detail having at least different direction of rotation.

The control unit 8 can comprise a memory.

The memory can include (or rather memorize) at least the mechanical characteristics of the shaker 1.

The mechanical characteristics identify the information (such as dimensions, mass, inertia) defined by the mechanical characteristics of the components of the shaker 1 necessary for the determination of vibration (frequency and/or force ) as a function of the output speed of the at least one motor 3.

Therefore, the unit 8 can be configured to determine a theoretical vibration (in detail the theoretical vibration frequency and/or force) at the output of the kinematic mechanism as a function of the speed of the at least one motor 3 and the mechanical characteristics of the shaker 1. To be precise, it can be configured to determine the theoretical vibration as a function of said mechanical characteristics and the speed of the motor 3.

The theoretical vibration identifies the vibration of the shaker 1 when not in use, that is, not tied to a tree.

The vibration (in detail the frequency and/or the vibration force) can be determined at the attachment 2 and for the accuracy of the contact surface with the tree.

The memory can include at least a minimum vibration (in detail a minimum frequency and/or a minimum force) and suitably a maximum vibration (in detail a maximum frequency and/or a maximum force).

The minimum vibration identifies the minimum vibration of attachment 2 necessary for fruit and/or flowers to fall from the tree.

In detail, the minimum frequency can be substantially between 1 Hz and 20 Hz, in detail between 5 Hz and 15 Hz and to be more precise, substantially equal to 10 Hz. The minimum force can be substantially between 5 N and 50 N, in detail between 5 N and 20 N and to be precise substantially equal to 10 N.

The maximum vibration identifies the maximum vibration value of the attachment 2 without having damage to the tree.

In detail, the maximum frequency can be substantially between 10 Hz and 50 Hz, in detail between 20 Hz and 40 Hz and, to be precise, substantially equal to 30 Hz. The maximum force can be substantially between 500 N and 3000 N, in detail between 750 N and 2000 N and to be precise substantially equal to 1000 N and 1500 N.

The memory can include a tree database associating a minimum vibration to each tree (to be precise, a minimum frequency and/or a minimum force) and suitably a maximum vibration (to be precise, a maximum frequency and/or a maximum force). The operator can thus select, through said interface, the tree allowing the unit 8 to know, thanks to said tree database, minimum and suitably maximum vibration.

The control unit 8 is in data connection with the at least one sensor 6 and/or 7 so that, at least in use (i.e., when the attachment 2 is constrained to the tree), the control unit 8 can be configured monitor the trend/variation over time of the data collected by said at least one sensor.

At least in use, the control unit 8 can be configured to define the mechanical characteristics of the tree as a function of the real vibration (in detail the frequency and/or real vibration force) determined by the sensor 6 and of the theoretical vibration. For example, the control unit 8 can be configured to determine the actual vibration at the tree as a function of the mechanical characteristics of the tree and the speed of the at least one motor 3.

In detail, the control unit 8 can be configured to define the mechanical characteristics of the tree as a function of the difference between real vibration and theoretical vibration. The unit 8 is thus configured to determine how the vibration of the shaker 1 varies when in use and, based on said difference, to identify the mechanical characteristics of the tree.

Once the mechanical characteristics of the tree have been defined, the control unit 8 can be configured to determine how the vibration at the tree varies according to the mechanical characteristics of the tree and the speed of the at least one motor 3. To be precise, it can be configured to determine the vibration at the tree as a function of said mechanical characteristics of the tree and the speed of the motor 3.

The control unit 8 can be configured to drive the at least one motor 3 at a speed such as to define a vibration at the tree substantially at least equal to a minimum vibration and preferably substantially comprised between said maximum vibration and said minimum vibration.

In addition, the unit 8 can be configured to drive the at least one motor 3 a speed such as to define a vibration to the operator substantially lower than a limit threshold.

In detail, it can be configured to command a speed to the motor 3 such as to define a vibration (in frequency and/or force) for the operator substantially lower than a limit threshold.

Preferably, additionally, the control unit 8 can be configured to drive the at least one motor 3 a speed such as to define a vibration to the operator substantially lower than a limit threshold and a vibration to the tree almost equal to at least a minimum vibration and preferably substantially comprised between the maximum and minimum vibrations.

The operator's vibration variation can be determined by the control unit 8 as a function of the speed of the at least one motor 3, of the mechanical characteristics of the shaker 1 and in detail of the mechanical characteristics of the tree.

The limit threshold identifies the maximum value of the vibration (in frequency and/or force) upstream of the kinematic mechanism 4 and therefore acting on the operator. It can be substantially lower than the vibration of the gripping element 22 and in detail substantially lower than 50% and, for accuracy, 30% vibration of the gripping element 22.

The operation of the shaker 1 described above in structural terms identifies a new shaking process **100** of trees schematized in Fig. 6.

The shaking process 100, which can be carried out by the shaker 1, can be configured to cause detachment from the tree and therefore facilitate the harvesting of flowers and fruits such as nuts, olives, berries and chestnuts.

The shaking process 100 can comprise a preparatory phase **110** in which the shaker 1 is constrained to a tree.

In phase 110 the attachment 2 is tied to the tree and for example to the trunk of the tree.

The shaking process 100 can comprise an active phase **120** in which the shaker 1 causes the tree to vibrate causing the fall of, for example, flowers and/or fruits. The active phase 120 can comprise, suitably in sequence, a first stimulation sub-phase **121** in which the at least one motor 3, controlled by the unit 8, defines an initial speed and vibrates the attachment 2 and therefore the tree; a first measurement sub-phase **122** in which the sensor 6 detects the initial real vibration (in frequency and/or force) at said initial speed; and a calibration sub-phase **123** in which the unit 8 determines and controls the motor 3 a speed such as to define vibration at the tree substantially at least equal to a minimum vibration and preferably almost comprised between the maximum and minimum vibrations.

In the first stimulation sub-phase 121 the control unit can command the motor 3 a speed.

At this point, fruits and/or flowers begin to fall from the tree causing a change in the mechanical characteristics of the tree. Therefore, the sensor 6 detects a variation in the real vibration (in frequency and/or force), allowing the unit 8 to adapt the speed of the at least one motor 3 to said vibration variation.

In detail, the active phase 120 can comprise a detection sub-phase **124** in which the control unit 8, through the sensor 6, detects a variation of real vibration; and a regulation sub-phase **125** in which the unit 8 commands to the at least one motor 3 a speed variation such as to keep the vibration on the tree almost at least equal to a minimum vibration and preferably substantially comprised between the maximum and minimum vibrations.

Sub-phases 124 and 125 are performed continuously.

Sub-steps 124 and 125 can be performed substantially in parallel.

The speed variation can be substantially proportional to the actual vibration variation.

In the detection sub-phase 124 the control unit 8 if, through the sensor 6, detects a variation in real vibration substantially at least equal to a limit value, it can command the stop of the at least one motor 3 and, suitably, send a signal of danger through said interface.

The limit value can be substantially comprised between 1 Hz and 20 Hz, in detail between 3 Hz and 15 Hz and, to be precise, substantially equal to 5 and/or 10 Hz. In the regulation sub-phase 125 the control unit 8 commands the at least one motor 3 a speed variation such as to keep the vibration at the tree almost constant.

In the active phase 120 the control unit 8 can command the at least one motor 3 a speed such that the vibration (in frequency and/or force) to the operator is substantially lower than a limit threshold. In detail, in the detection sub-phase 124 the additional sensor 7 can detect the vibration to the operator; and in the regulation sub-phase 124 the unit 8 can drive the at least one motor 3 a speed such as to have a vibration to the operator almost below a limit threshold and a vibration on the tree almost equal to a minimum vibration and preferably substantially between maximum vibration and minimum vibration.

In the regulation sub-phase 124 the control unit 8 can vary the first speed and the second speed independently of each other.

The shaker 1 according to the invention achieves important advantages.

In fact, the shaker 1 is characterized by relatively simple mechanics and therefore by a high efficiency and by reduced purchase, use and maintenance costs. In fact, the adoption of a kinematic mechanism 4 with double connecting rod-crank mechanism 4b and 4c allows to have a simple and effective system for generating vibrations.

This aspect also makes it possible to implement the innovative solutions of the shaker 1 also to devices already known/used in a simple, rapid and economical way. An important advantage is identified by the innovative control of the vibrations to the tree which always gives an optimal vibration (in frequency and/or force) thanks to the possibility of detecting the mechanical characteristics of the tree by adapting the motor 3 to these characteristics. This aspect is accentuated by the continuous monitoring of the variation of the mechanical characteristics of the tree which makes it possible to always have said optimal vibration to the tree.

This advantage translates into the fact that, unlike the known shakers, the shaker 1 allows to detach almost all the flowers and fruits without damaging the tree. Another advantage is in the fact that the shaker 1 performs a vibration control for the operator and therefore is able to always ensure an optimal vibration both to cause the detachment of fruits and/or flowers and to avoid injuring the operator. The invention is susceptible of variants falling within the scope of the inventive concept defined by the claims.

In order to have a first speed different from the second, the shaker 1 can comprise
a first motor 3 for actuating the first connecting rod-crank mechanism 4b and a second motor 3 for actuating the second connecting rod-crank mechanism 4c.
a command for the piston 42 and a second connecting rod-crank mechanism 4c for controlling said piston 42.

The first motor 3 can generate a first motion, suitably of rotation, of the first crank 43.

The second motor 3 can generate a second motion, suitably of rotation, of the second crank 45.

The first motor 3 and the second 3 can be controlled independently so as to define different speeds, suitably of rotation, of the cranks 43 and 45. Preferably the speeds of the cranks 43 and 45 have an opposite direction and in detail the same and/or different module.

The first motor 3 and the second motor 3 can be controlled independently so as to define different speeds, suitably of rotation, of the cranks 43 and 45. Preferably the speeds of the cranks 43 and 45 have an opposite direction and in detail the same modulus and/or different.

In this case, the unit 8 can be configured to determine a theoretical vibration in output from the kinematic mechanism as a function of the speed of the at least one motor and the mechanical characteristics of the shaker 1. To be precise, it can be configured to determine the theoretical vibration in a function of said mechanical characteristics and of the first speed of the first motor 3 and of the second speed of the second motor 3.

In some cases, the damper 48 may comprise at least one additional motor to move and in detail rotate at least one mass balancer 481 and/or 482 with respect to the connecting rods 44 and/or 46. In detail, the damper 48 can comprise a first additional motor 3 for moving the one or more first masses 481 with respect to the first connecting rod 44 and a second additional motor 3 for moving the one or more second balancing weights 482 with respect to the second connecting rod 46. Said additional motor 3 can be controlled by the control unit 8 so as to regulate the vibrations to the operator. In detail, the unit 8 can be configured to control (suitably in the active phase 120 and in detail in the regulation sub-phase 124) as a function of the additional sensor 7 the at least one additional motor 3 and to be precise the first additional motor 3 and the second additional motor 3 in a suitably independent way.

In this context, all the details can be replaced by equivalent elements and the materials, shapes and dimensions can be any.

## Claims

1. Tree shaker (1) comprising:
- an attachment (2) to one of said trees;
- at least one motor (3) for generating a motion defining a speed;
- a kinematic mechanism (4) configured to exploit said motion produced by said at least one motor (3) to cause said attachment (2) and therefore said tree to vibrate; and **characterised by the fact** that said kinematic mechanism (4) includes
- a guide (41) defining a sliding axis (4a);
- a piston (42) configured to slide along said guide (41) by dragging said attachment (2);
- a first crank (43) configured to be rotated by said at least one motor (3);
- a first connecting rod (44) configured to be kinematically interposed between said first crank (43) and said piston (42) so as to control, as a function of the rotation of said first crank (43), the sliding of said piston (42) to a first speed;
- a second crank (45) configured to be rotated by said at least one motor (3);
- a second connecting rod (46) configured to be kinematically interposed between said second crank (45) and said piston (42) so as to control, as a function of the rotation of said second crank (45), the sliding of said piston (42) to a second speed different from said first speed;
- elastic means (47) interposed between said second connecting rod (46) and said piston (42) so as to load and unload according to the difference between said first speed and said second speed, vibrating said piston (42) and therefore said attachment (2).

2. Shaker (1) according to claim 1, wherein said at least one motor (3) comprises a first motor (3) generating a first motion of said first crank (439) and a second motor (3) generating a second motion of said second crank (45).

3. Shaker (1) according to claim 2, wherein said control unit (8) independently controls said first motor (3) and said second motor (3).

4. Shaker (1) according to at least one preceding claim, wherein said first crank (45) is identified in a crank-tree comprising only one first connecting rod pin (45a) and in which said first connecting rod (44) is connected to said first pin connecting rod (43a); and in which said second crank (46) is identified in a crank-tree comprising only one second connecting rod pin (43a) and in which the second connecting rod (46) is connected to said second connecting rod pin (45a).

5. Shaker (1) according to at least one preceding claim, wherein said kinematic mechanism (4) comprises a vibration damper (48) configured to reduce vibrations to said operator; and wherein said damper (48) comprises at least a first mass balancer (481) constrained to said first crank (43); at least a second mass balancer (482) constrained to said second crank (45); a first additional motor (3) for moving said at least one first mass balancer (481) with respect to said first connecting rod (44) and a second additional motor (3) for moving said at least one second mass balancer (482) with respect to said second connecting rod (46).

6. Shaker (1) according to claim 5, wherein said damper (48) comprises two of said at least one first mass balancer (481) and two of said at least one second mass balancer (482); and in which said second mass balancers (482) enclose said first mass balancers (481).
